Europäisches Patentamt

European Patent Office    (11) Publication number:    **0 226 963**

Office européen des brevets    **A2**

(12)    # EUROPEAN PATENT APPLICATION

(21) Application number: **86117254.2**    (51) Int. Cl.⁴: **G 06 F 15/16**

(22) Date of filing: **11.12.86**

(30) Priority: **17.12.85 US 809894**

(43) Date of publication of application:
**01.07.87 Bulletin 87/27**

(84) Designated Contracting States:
**DE FR GB NL**

(71) Applicant: **GENERAL ELECTRIC COMPANY
1 River Road
Schenectady New York 12305(US)**

(72) Inventor: **Puerzer, Bernard George
3209 South Kinnickinnic Avenue
Milwaukee Wisconsin 53207(US)**

(72) Inventor: **Morse III, Royal Ray
S8 W31381 Mary Margaret Court
Wales Wisconsin 53183(US)**

(74) Representative: **Catherine, Alain et al,
General Electric - Deutschland Munich Patent Operation
Frauenstrasse 32
D-8000 München 5(DE)**

(54) **Data switching for combined bus and star data network.**

(57) A dual-data-rate bus system employs a first data rate in a star bus system external to a data switch a higher data rate on a bus internal to the data switch. The internal data rate is selected high enough to permit simultaneous data communication between all suitable pairs of external nodes without data loss. In the preferred embodiment, external communication between the data switch and external nodes employs carrier-sense, multiple-access, with collision detection and the internal bus employs parallel communication with polling or token passing. The internal data rate is at least $n/2$ times the data rate of each external link, where $n$ is the number of external links. In a further embodiment, the internal bus employs serial carrier-sense, multiple-access, with collision detection operating at a data rate at least 10 percent greater than $n/2$ times the data rate of each external link.

Fig. 1

B. Puerzer and R. Morse
15-MM-2642

1

## DATA SWITCHING FOR
## COMBINED BUS AND STAR DATA NETWORK

BACKGROUND OF THE INVENTION

The present invention relates to digital data transmission and, more particularly, to high-performance digital data transmission equipment for communicating between a plurality of nodes.

A distributed digital data system consists of a plurality of functions capable of communicating with each other over a suitable communications system. Each function, called a node, may receive, transmit, or both. A node may be, for example, a stand-alone personal computer with autonomous computing capability, a dumb terminal without autonomous computing capability, a printer, a communications link, or a gateway to a different network.

Three general classes of networks are in common use:

star

ring

bus

In a star network, each node is directly connected by a dedicated cable radiating outward from a network server. Such a network provides continuous direct access to the network core by all nodes. A star network provides dedicated links for each node. Problems of interference between nodes attempting simultaneous access to a shared communication asset does not arise.

A ring network, as its name implies, connects adjacent nodes into a closed ring. A message originating in one node is passed on an interconnecting cable to its adjacent node. If the message is addressed to the adjacent node, the adjacent node detects this fact and acts to receive it. If the message is not addressed to the adjacent node, it is passed on to the next node in the ring until the addressee node is found. Upon reception, the receiving node may place an acknowledgement message on the cable addressed to the node originating the message to confirm receipt. The acknowledgement message progresses from node to node until it is received at the original destination. The unidirectional data flow in a ring network tends to limit the data rate. In addition, since each node is responsible for passing unaccepted messages to its neighbor, failure of one node can interrupt the entire network.

A bus is a linear network consisting of a twisted-pair or coaxial link to which nodes are attached at convenient locations. All nodes apply messages to the bus and monitor the bus for messages addressed to them. Failure of one node is not capable of halting network operation. The linear nature of the bus avoids the cabling costs of the star network. Most common busses carry serial data at data rates varying from a few kilobits per second to hundreds of kilobits per second.

A bus network provides means for directing data between any two specific nodes and for dealing with potential interference when two or more nodes demand access to the bus at the same time. One method of dealing with such interference employs a carrier-sense, multiple-access with collision detection (CSMA/CD). One CSMA/CD bus protocol is described in the IEEE Network Standard 802.3. One commercial network system embodying the 802.3 standard is known as Ethernet and is available from 3Com. The IEEE Network Standard 802.3 specifies a baseband system having a bit rate of 10 megabits per second. As will be later detailed, the actual ability of such a bus network to communicate intelligence is considerably lower than its bit rate.

A further method for avoiding interference between competing users of a network includes polling or token passing, in which each node is given a time slot for transmitting on the network. When the time slot for a node arrives, if the node is ready to transmit, it does so; otherwise, the system passes to the next node. Since no time is lost as a result of collisions, and since only a short waiting time is required to determine that a node is unready, a minimum amount of bus time is lost on interference avoidance. In contrast with a CSMA/CD system, however, a polling or token-passing system generally requires a server to control the network.

Bus transmission employs data packets which may be of fixed or variable length. Each data packet contains a header, intelligence and a trailer. The intelligence in a data packet may be only part of a total message from the transmitting to the destination node. The header provides synchronizing signals, identifies the source and intended destination of the message, and includes information identifying the sequence that the intelligence in the data packet occupies with respect to intelligence in related data packets. The trailer typically contains a cyclic-redundancy-check, or checksum, message which the receiving node uses to verify that the data packet is received without error.

According to the Ethernet standard, a data packet has a fixed maximum length regardless of the length of the total message being transmitted. The header and trailer contain no intelligence and are therefore considered overhead to the data transmission. The ratio of overhead to intelligence depends on the size of the header and trailer and the length of the intelligence portion contained therein. Some systems require the ability to deal with short messages. Such systems may employ data packets having a total length of, for example, 128 bytes (eight-bit words) with a header of 44 bytes and a trailer of four bytes thus leaving 80 bytes for data. The efficiency degrades even further if the typical message consists of less than 80 bytes. Although a relatively inefficient data transmission technique, it is optimized for short data transmission.

For longer messages, longer data packets improve the transmission efficiency.  The above Ethernet system, for example, employs data packets of about 1500 bytes with a 44-byte overhead.  The overhead thus becomes a relatively small percentage of the data packet.

One application of bus transmission we foresee for the present invention includes transmission of graphic data.  Such graphic data typically comprises several hundred thousand to several million bytes per message.  A larger data packet is therefore indicated for achieving high transmission efficiency.  In a graphics data transmission system, a data packet length of about 4,000 bytes may be employed.  When the data portion of the data packet is filled, the ratio of overhead to total length becomes insignificant.  In the usual case, the last data packet is only partly filled.  The unfilled part of the last data packet in a message is overhead.  A system transmitting graphics data with a bus speed of, for example, 9.6 megabits per second may achieve a data-transmission rate on the order of about 9 megabits per second.

The equipment using bus data may be send/ receive, receive-only, or send-only.  A send/receive equipment may be a computer terminal.  A receive-only equipment may be a graphics display or a printer.  A send-only equipment may be a video camera chain, a CAT (computer axial tomography) scanner, or a magnetic resonance scanner.

Each node requires interface equipment for interfacing the using equipment with the bus data.  One interface technique which may be employed is disclosed in our co-pending patent application Serial No. (Attorney's Docket No. 15-MM-2643), the disclosure of which is herein incorporated by reference.

Only a limited number of nodes may access the bus at any time. When a message is addressed to a particular node, only the sending and receiving nodes have meaningful access to the network. Although conditions can occur in which an all-nodes message may be placed on the network, such conditions do not conform to the above network standard.


OBJECTS AND SUMMARY OF THE INVENTION

Accordingly, it is an object of the invention to provide a network which overcomes the drawbacks of the prior art.

It is a further object of the invention to provide a network having a plurality of external busses serving a plurality of nodes at a first data rate and an internal bus interconnecting the external busses and operating at a second data rate which is sufficiently higher than the first data rate to permit substantially all nodes on external busses to communicate through the network at their full data rates with any one or more of the other nodes.

Briefly stated, the present invention provides a network employing a dual-data-rate bus system with a first data rate in a star bus system external to a data switch, and a bus internal to the data switch employing a second, higher data rate. The internal data rate is selected high enough to permit simultaneous data communication between all suitable pairs of external nodes without data loss. In the preferred embodiment, external communication between the data switch and external nodes employs carrier-sense, multiple-access, with collision detection and the internal bus employs parallel communication with polling or token passing. The internal data rate is at least n/2 times the data rate of each external link, where $n$ is the number of external links. In a further embodiment, the internal bus employs serial carrier-sense, multiple-access, with collision detection (CSMA/CD) operating at a data rate at least 10 percent greater than n/2 times the data rate of each external link.

According to an embodiment of the invention, there is provided a data communications system comprising: at least first, second, third and fourth nodes, a data switch, external means for independently communicating data between each of the first, second, third and fourth nodes and the data switch at a first data rate, internal means in the data switch for communicating data between all pairs of the nodes at a second data rate, and the second data rate being at least n/2 times the first data rate wherein $n$ is a number of the external means.

According to a feature of the invention, there is provided a method for communicating data between at least first, second, third and fourth nodes, comprising: independently connecting the first, second, third and fourth nodes to a data switch,

independently communicating data between each of the first, second, third and fourth nodes and the data switch at a first data rate, communicating data between all pairs of the nodes in the data switch at a second data rate, and the second data rate being at least n/2 times the first data rate, wherein $\underline{n}$ is a number of the nodes independently connected to the data switch.

The above, and other objects, features and advantages of the present invention will become apparent from the following description read in conjunction with the accompanying drawings, in which like reference numerals designate the same elements.


BRIEF DESCRIPTION OF THE DRAWINGS

Fig. 1 is a simplified block diagram of a bus communications system.

Fig. 2 is a simplified block diagram of a combined star and bus communications system according to an embodiment of the invention.

Fig. 3 is a simplified block diagram of a data switch of Fig. 2.

Fig. 4 is a simplified block diagram showing the elements employed in communication between one node and the data switch of Figs. 2 and 3.


DETAILED DESCRIPTION OF THE PREFERRED EMBODIMENT

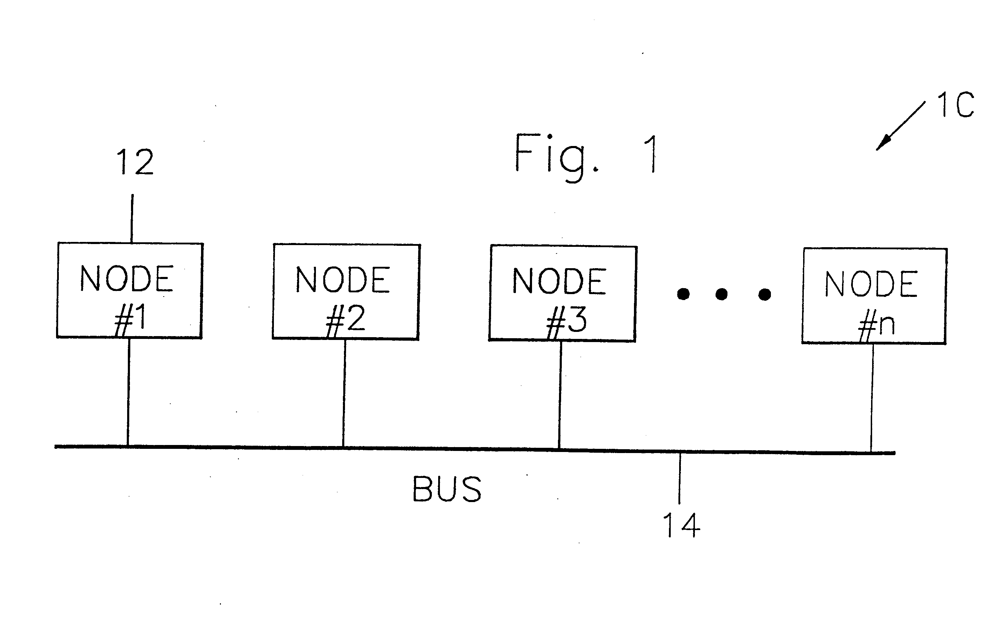

Referring to Fig. 1, there is shown, generally at 10, a bus system in which a plurality of nodes 12 are connected to a bus 14.  Bus system 10 employs serial data transmission on bus 14.  A bus protocol such as, for example, that described in the aforementioned IEEE standard permits all nodes 12 to monitor bus 14 for messages addressed to them at all times.  Whenever one of nodes 12 requires access for transmitting on bus 14, it first listens to determine whether any other of nodes 12 is transmitting and, if it does not detect the presence of a competing message, it begins transmitting a data packet.  A header on the data packet includes an address of the intended receiving node as well as housekeeping data to permit the receiving node to assemble a plurality of related data packets into a complete message.  The transmitting node conventionally appends a trailer at the end of the data packet containing a cyclic-redundancy check word (CRC) or a checksum which the receiving node independently calculates from the data packet.   If the transmitted and independently calculated CRCs or checksums agree, the receiving node accepts the message packet and, when asked to do so, transmits an acknowledgement message addressed to the transmitting node.  If they disagree, the receiving node discards the failed message packet and relies upon the transmitting node to replace it with a good packet transmission.

A conventional Ethernet system having a bus data rate of 10 megabits per second may be limited to a throughput of as little as 2 megabits per second because of gaps in the transmitted data necessitated by housekeeping chores within nodes 12.  Our prior referenced patent application provides sufficient parallel processing of such housekeeping chores that a data throughput in excess of 9 megabits per second may be achieved.

Some network systems are sufficiently data-intensive to exceed the ability of an Ethernet-type network such as that shown in Fig. 1. For example, transmission of real-time, high-resolution video between one pair of transmitting and receiving nodes 12 is capable of absorbing the entire data-transmission capacity of bus system 10 for extended periods of time. As a result, if more than one pair of nodes 12 attempt to transmit this type of information, bus system 10 becomes, and remains, grossly overloaded. Furthermore, as the transmitting nodes all attempt to capture bus 14, a greater probability of collision, with attendant further reduction in throughput, results.

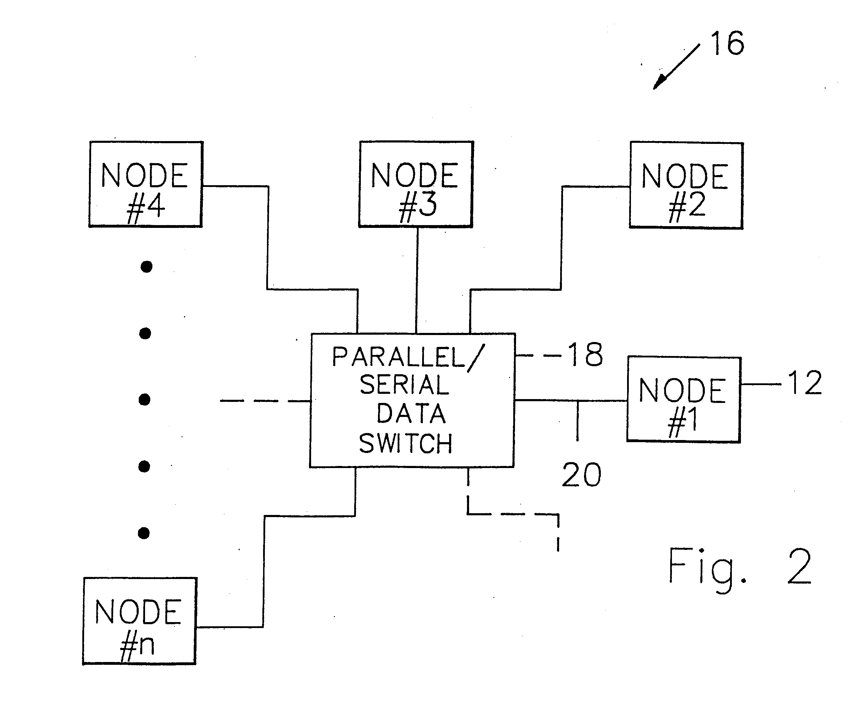

Referring now also to Fig. 2, there is shown, generally at 16, a combined bus and star system according to an embodiment of the invention. A plurality of nodes 12 which may be, for example, identical to those in bus system 10 of Fig. 1, are each connected directly to a serial/parallel data switch 18 by a branch 20. Communication between each node 12 and serial/parallel data switch 18 is performed on branch 20 in an identical manner to communication between any pair of nodes 12 in Fig. 1. That is, each node 12 and branch 20 forms, with serial/parallel data switch 18, an auxiliary bus system in which all nodes 12 are capable of transmitting or receiving data from serial/parallel data switch 18 at its full capacity. Internal circuits in serial/parallel data switch 18 connect any combination of nodes 12 for simultaneous communication therebetween, as will be explained hereinafter.

Thus if $n$ nodes 12 are provided in combined bus and star system 16, the total system data rate between all the pairs of nodes 12 is equal to n/2 times the data rate of one node 12. For example, if $n = 4$, simultaneous transmission from two transmitting nodes 12 to two respective receiving nodes 12 can be carried on without requiring greater data rates in the branches 20.

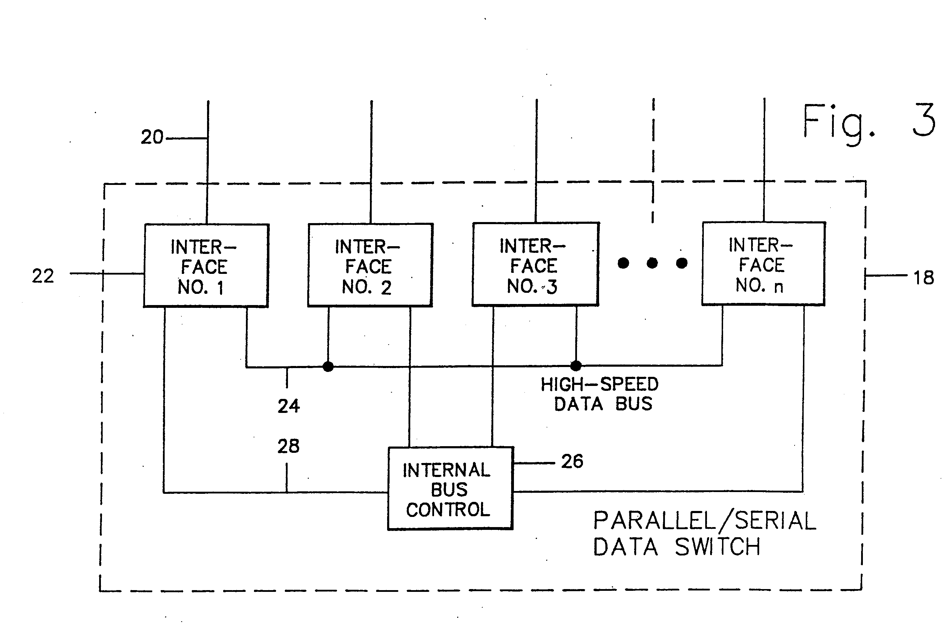

Referring now to Fig. 3, serial/parallel data switch 18 contains an interface 22 connected to each branch 20. An internal high-speed data bus 24 interconnects all interfaces 22 for communication therebetween. It is contemplated that internal communication within serial/parallel data switch 18 may use a token-passing, or polling, control system in which each interface 22 is assigned a fixed time slot within which it is permitted to transmit. An internal bus control 26 performs the polling or time-slot assignment by signals on separate control lines 28. If a node 12 is not ready to transmit at the beginning of its time slot, internal bus control 26 senses such unreadiness by monitoring for an acknowledgement signal on control line 28 and, failing to get such acknowledgement, passes on to the next node 12 with minimum delay.

It will be clear to one skilled in the art that the data rate on high-speed data bus 24 is higher than the data rate on any of branches 20. In order

to permit simultaneous communication between all
pairs of nodes 12, the data rate on high-speed data
bus 24 must equal or exceed n/2 times the data rate
on one branch 20.  Since the distance to be covered
by high-speed data bus 24 is small, such increase in
data rate is readily accomplished with existing
components.  For example, high-speed data bus 24 may
employ a parallel transmission in which all bits in a
data word are transmitted in parallel on separate
conductors.  Such parallel transmission is suitable
for distances of up to a few meters without repeaters
and significantly increases the total data
transmission rate.  Distances of up to several
thousand meters between a node 12 and serial/parallel
data switch 18 are conventional for an Ethernet-type
system.  Thus, advantage can be taken of the long
distances covered at moderate data rates external to
serial/parallel data switch 18 and the higher data
rates possible at shorter distances within
serial/parallel data switch 18.

     With polling or token-passing, the total data
rate capability of high-speed data bus 24 needs to be
about equal to, or very slightly higher than, n/2
time the data rate of branches 20.  This provides for
a probability approaching one that a data packet
entering one interface 22 is communicated to its
receiving interface 22 without data loss.

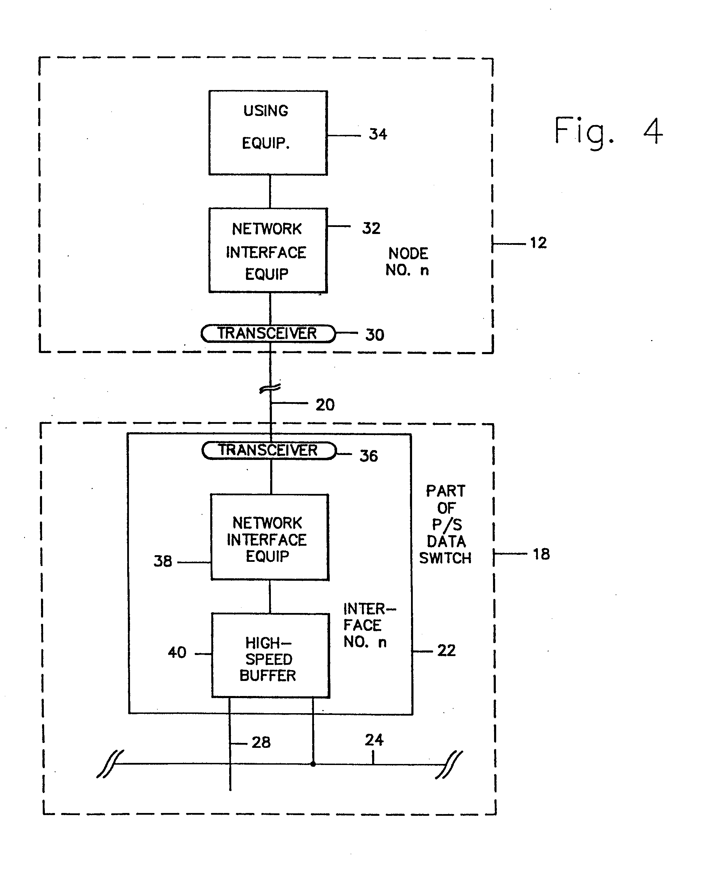

     Referring now to Fig. 4, relevant parts of a
node 12 and an interface 22 in serial/parallel data
switch 18 are shown.  Node 12 contains a conventional
transceiver 30 for converting between internal binary
data and external Manchester-coded data.  A network interface equipment 32 which may be, for example, the type disclosed in our co-pending patent application, provides buffering for receiving data from, and transmitting data to, transceiver 30 and performs housekeeping chores on data packets to satisfy bus protocol. A using equipment 34, which may be receive-only, transmit-only, or send/receive equipment, communicates with network interface equipment 32.

In interface 22, a transceiver 36 and a network interface equipment 38 cooperate in the manner described above for interfacing data between branch 20 and a high-speed buffer 40. Transceiver 36 and network interface equipment 38 may be identical to corresponding elements in node 12. As seen by network interface equipment 38, high-speed buffer 40 is the same as any other using equipment. That is, it sends and/or receives data to or from network interface equipment 38 at a data rate appropriate for the data rate of information on branch 20. High-speed buffer 40 communicates with high-speed data bus 24 at the higher data rate required thereon under control of signals on control line 28.

It will be noted that both data rate and distance-covering capacity are optimized in the present invention. That is, the longer distances for communication between a node 12 and serial/parallel data switch 18 are spanned by branches 20 which are capable of transmission over links of a few thousand meters, while the shorter distances within serial/parallel data switch 18 are spanned by high-speed data bus 24 which has a higher data rate but, in some systems, can communicate no more than a few meters.

The present invention should not be considered limited to a parallel data bus or to a polling, or token-passing, system. An embodiment employing a serial CSMA/CD, or other communications protocol, on high-speed data bus 24 should be considered within the contemplation of the invention. The critical requirement is that a data packet to be sent or received be processed through serial/parallel data switch 18 without becoming lost. This requirement is satisfied in the token-passing or polling system with a maximum internal data rate approximating n/2 times the external data rate. When a CSMA/CD system is employed on high-speed data bus 24, the competition for resources thereon may reduce the data throughput rate at a critical time whereby the need for communicating a data packet may occur when insufficient internal data capacity is available. As the internal data rate is increased, the probability of a collision interfering with external communication decreases and, at some value of internal data rate, substantially vanishes. Although the exact value of data rate overcapacity required substantially to eliminate lost external data is subject to numerous variables such as, for example, internal and external data packet size and buffer storage capacity in high-speed buffer 40, in the preferred embodiment, an internal CSMA/CD having a data rate of at least 10 percent greater than n/2 times the external data rate should avoid data loss. In a more preferred embodiment, an internal data rate of at least 50 percent greater than n/2 times the external data rate is employed.

For short-range systems such as contemplated for the internal high-speed data bus 24 in serial/ parallel data switch 18, relatively high data rates are available at moderate cost. In addition, the cost for techniques offering extremely high data rates is being reduced. Thus, low costs may encourage the use of internal data rates several times as great as the above minimums for providing opportunities for future expansion and for further reducing the probability of data loss. For example, current technology offers fiber-optic communications links having a data rate on the order of one gigabit per second. This exceeds the Ethernet data rate by a factor of 100. If a system employing 50 nodes 12 is employed with such a fiber-optic internal communication high-speed data bus 24, an overcapacity of a factor of four exists in the internal high-speed data bus 24 for avoiding data loss.

One skilled in the art will recognize that branch 20 sees a conventional Ethernet terminal at each of its ends. One or more of branches 20 of Figs. 2 and 3 may require a data throughput substantially less than that available. It is thus contemplated that one or more of branches 20 operate in the same manner as bus 14 of Fig. 1 wherein, besides the connection to serial/parallel data switch 18 as one of its nodes, connection is made to more than one node 12 leading to user equipments. Such low-data-rate equipments may consist of some combination of modems, data terminals and the like.

One skilled in the art will recognize that the present invention is not limited to a particular bit rate or to a baseband system communicating on wires or coaxial cables. It is within the contemplation of the present invention to employ the techniques disclosed herein in a broadband system which may be communicated between nodes on media other than wires or coaxial cables. Broadband systems may employ a plurality of subcarriers upon each of which is imposed one data channel. Each such data channel may be considered the equivalent of an 802.3 baseband channel. Transmission media may include, for example, microwave transmission for covering at least part of the distance between nodes. Optical transmission, which may take place in air or be constrained to other optical communications media such as, for example, glass fibers, is equally a candidate. Glass fibers offer greater bandwidths which may be on the order of gigabits per second.

Having described preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

What is claimed is:

1.  A data communications system comprising:
at least first, second, third and fourth nodes;
a data switch;
external means for independently communicating data
between each of said first, second, third and fourth
nodes and said data switch at a first data rate;
internal means in said data switch for
communicating data between all pairs of said nodes at
a second data rate; and
said second data rate being at least n/2 times
said first data rate wherein $n$ is a number of
said external means.

2.  A data communications system according to
claim 1 wherein said external means includes means
for communicating on a bus with carrier-sense,
multiple-access, with collision detection.

3.  A data communications system according to
claim 1 wherein said internal means includes a
parallel bus.

4.  A data communications system according to
claim 3 wherein said internal means includes means
controlled by one of token-passing and polling.

5.  A data communications system according to
claim 1 wherein said internal means includes
carrier-sense, multiple-access, with collision
detection.

6.  A data communications system according to
claim 5 wherein said second data rate is at least 10 percent greater than n/2 times said first data rate, where $\underline{n}$ is equal to a number of said external means.

7. A data communications system according to claim 1 including at least a further external means connected to said data switch, and at least fifth and sixth nodes connected to said external means.

8. A method for communicating data between at least first, second, third and fourth nodes, comprising:

independently connecting said first, second, third and fourth nodes to a data switch;

independently communicating data between each of said first, second, third and fourth nodes and said data switch at a first data rate;

communicating data between all pairs of said nodes in said data switch at a second data rate; and said second data rate being at least n/2 times said first data rate, wherein $\underline{n}$ is a number of said nodes independently connected to said data switch.

Fig. 1

1C

12

| NODE #1 | NODE #2 | NODE #3 | • • • | NODE #n |
|---------|---------|---------|-------|---------|

BUS

14

Fig. 2

Fig. 3

PARALLEL/SERIAL DATA SWITCH

INTER-FACE NO. n

INTER-FACE NO. 3

INTER-FACE NO. 2

INTER-FACE NO. 1

HIGH-SPEED DATA BUS

INTERNAL BUS CONTROL

ISM 26
0226963

Fig. 4